# EUROPEAN PATENT SPECIFICATION

(11) **EP 3 184 858 B1**
(45) Date of publication and mention of the grant of the patent: **12.09.2018**
(21) Application number: 16206828.2
(22) Date of filing: 23.12.2016
(51) Int. Cl.: F16H 55/56

(54) **PULLEY ASSEMBLY FOR A CONTINUOUSLY VARIABLE TRANSMISSION**
SCHEIBENANORDNUNG FÜR EIN STUFENLOSES GETRIEBE
ENSEMBLE DE POULIE POUR UNE TRANSMISSION À VARIATION CONTINUE

(30) Priority: 24.12.2015 IT UB20159631
(43) Date of publication of application: 28.06.2017
(73) Proprietor: Fanotto, Alessandro, 33054 Lignano Sabbiadoro (UD) (IT); De Boni, Stephan, 33054 Lignano Sabbiadoro (UD) (IT); Frate, Lorenzo, 33082 Azzano (UD) (IT)
(72) Inventor: Fanotto, Alessandro, 33054 Lignano Sabbiadoro (UD) (IT); De Boni, Stephan, 33054 Lignano Sabbiadoro (UD) (IT); Frate, Lorenzo, 33082 Azzano (UD) (IT)
(74) Representative: Dalla Rosa, Adriano

(56) References cited:
- EP-A1- 1 927 791
- JP-A- 2007 205 526
- US-A- 3 394 607
- US-A- 4 102 214

## Description

The invention refers to a pulley assembly for a stepless speed change gear, commonly named CVT, adapted to be applied onto the motor vehicles, in particular motorcycles, such as for example scooters or mini-motorcycles, which can be manufactured easily and quickly. From US4102214A are known a centrifugal clutch and variable-speed pulley having a movable pulley flange mounted for both axial and rotational movement relative to a fixed flange. The fixed flange hub has a cylindrical primary bearing at the opposite side of the pulley groove from the flange and has a hub extension of reduced diameter which provides an elongated outboard bearing surface. The movable flange is on a hub sleeve which has an elongated internal bearing liner engaging the primary bearing and has an outboard bearing riding on the hub extension surface. The hubs have counterbores defining a spring chamber about the hub extension, where a spring acts to urge the flanges apart. Thrust faces on the hubs, radially outward of the spring, come together to limit flange closing movement. Plastic disk-shaped centrifugal weights mounted in angularly spaced channels on the back of the movable flange are normally under preload against a reaction cone on the hub extension, to limit opening movement of the flanges and to provide initial frictional torque drive between the movable flange and the cone. Centrifugal force drives the weights outward along the cone to urge the flanges together. A threaded joint between the hub extension and the fixed flange hub receives spacers to shift the opening limit while maintaining the preload and initial torque drive. A spacer between the hub thrust faces shifts the closing limit position. Equal spacers maintain the same throw while varying the pulley groove width to suit different width belts. The object of the present invention is to realize a pulley assembly for a stepless speed change gear, which simplifies the manufacturing steps utilized at the present time, without changing the automatic basic operation thereof.

The invention will be better understood from the following description, given by way of a not limitative example only and with reference to the accompanying drawings, in which :
- Fig. 1 shows a perspective front view of the pulley assembly for a stepless speed change gear in a first embodiment thereof, according to the invention ;
- Fig. 2 shows a side cutaway view of the pulley assembly of Fig. 1, in a first working position thereof;
- Fig. 3 shows a perspective front view of a first component of the pulley assembly of Fig. 1, according to the invention ;
- Fig. 4 shows a side cutaway view of the component of Fig. 3 ;
- Fig. 5 shows a perspective rear view of a second component of the pulley assembly of Fig. 1, according to the invention ;
- Fig. 6 shows a side cutaway view of the component of Fig. 5 ;
- Fig. 7 shows a perspective cutaway view of the component of Fig. 5, on to a different plane of the Fig. 6 ;
- Fig. 8 shows a cutaway side view of the pulley assembly of Fig. 1, in a second working position thereof;
- Fig. 9 shows a cutaway side view of the pulley assembly of Fig. 1, in a third working position thereof;
- Fig. 10 shows a perspective front view of the pulley assembly for a stepless speed change gear, in a second embodiment thereof, according to the invention ;
- Fig. 11 shows a perspective front view of a first component of the assembly shown in the Fig. 10 ;
- Fig. 12 shows a front view of the component of Fig. 11 ;
- Fig. 13 shows a perspective view of the first component of Fig. 11 joined to second components of the assembly of Fig. 10 ;
- Fig. 14 shows a front view of the components joined to each other, represented in the Fig. 13 ;
- Fig. 15 shows a perspective side view of the Fig. 13 ;
- Fig. 16 shows a perspective rear view of one of the second components represented in the Fig. 13 ;
- Fig. 17 shows a perspective front view of the component of Fig. 16 ;
- Fig. 18 shows a perspective view of the components of Fig. 13 and a third component of the assembly of Fig. 10 joined to each other ;
- Fig. 19 shows a perspective front view of the third component of Fig. 18 ;
- Fig. 20 shows a perspective front view of a fourth component of the assembly of Fig. 10 ;
- Fig. 21 shows a perspective rear view of the fourth component of Fig. 20 ;
- Fig. 22 shows a view from top of the fourth component of Fig. 20 .

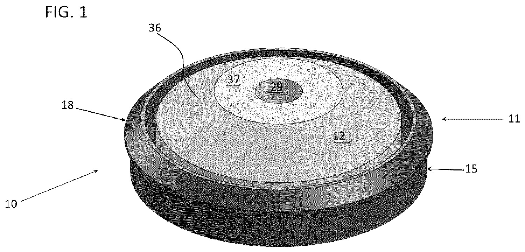

In the above Figs 1-9, it is shown a pulley assembly 10 for a stepless speed change gear CVT, adapted to be applied to motor vehicles, in particular motorcycles, such as for example scooters or mini-motorcycles, which can be manufactured easily and quickly, which assembly 10 is composed mainly by a first movable half-pulley 11, a second stationary half-pulley 11', a front closing cover 12, a set of rolling elements such as for example rollers or spheres 13, and a hub 14.

The movable half-pulley 11 is coupled with the closing cover 12, by enclosing between them the set of rollers 13, and is inserted on to the hub 14 in a manner integral in rotation and longitudinally slidable.

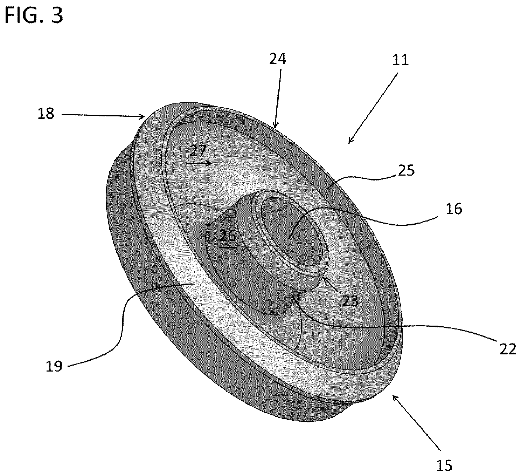

Such a half-pulley 11, shown in the Figs. 3-4, is constituted integral of a metallic material by a cylindrical body 15 with an axial central through hole 16, such a body 15 having at the back part thereof a conical surface 17 and frontally having along its perimeter 18 a peripheral flat or conical surface 19, provided with an underlying orthogonal step 20, that is joined with a cylindrical surface 21 to the conical surface 17. In the front part of the body 15, axially to the hole 16 a central cylinder 22 is provided centrally, the external flat or beveled end portion 23 of which is slightly projected with respect to the external edge 24 of the flat or conical surface 19. Such perimeter 18 and the base of the central cylinder 22 are shaped respectively with an internal flat surface 25 and an external flat surface 26, of which the first one has a length smaller than the second one, and which are joined to each other through a circular groove 27 with a curved outline with a variable radius, having a greater curving radius in correspondence of the junction with the flat surface 25 and a smaller curving radius in correspondence of the junction with the flat surface 26.

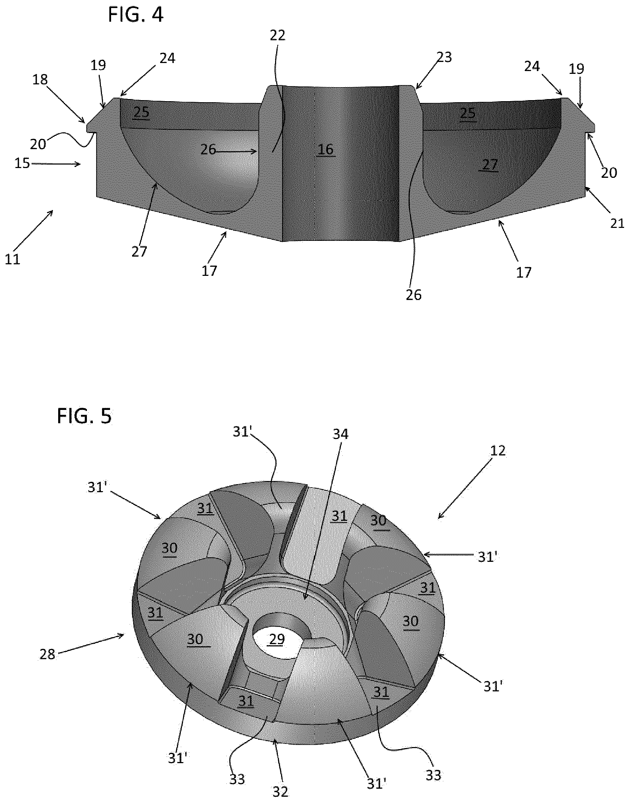

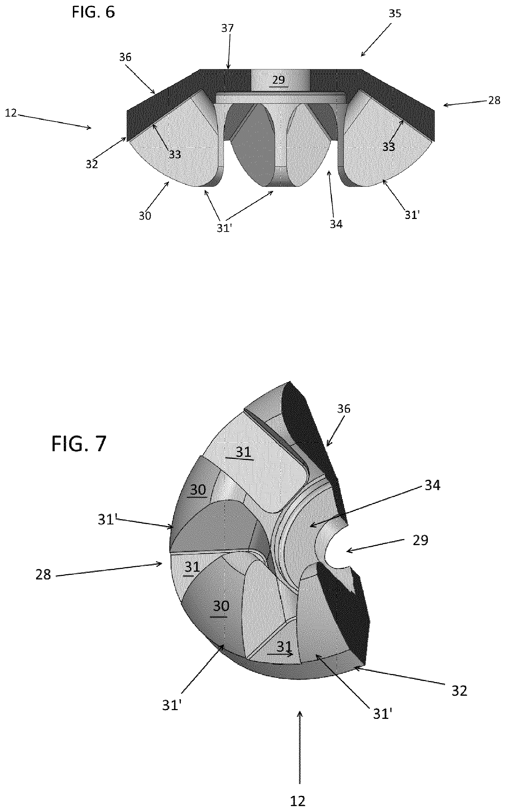

Said front closing cover 12, shown singularly in the Figs. 5-7, is manufactured integral of metallic material by machining with machine tools, and is substantially constituted by a cylindrical body 28 with a first axial central through hole 29. Such a cylindrical body 28 has at the back part thereof a surface 30 tapered centrally for forming a second central hole 34, with a diameter greater than the first central hole 29 and concentric thereto. Such a back surface 30 has an inclined flat outline or with a variable radius with such dimension and shape as to be able to be coupled with the circular groove 27 of the first half-pulley 11, without coming into contact therewith, and has also a set of depressed slots 31 provided radially along the entire surface 30 and spaced away to each other, by creating some vertical and radial portions 31' having a triangular or trapezoidal base, that are extended from the external circumference 32 of the cylindrical body 28 up to near the central hole 29, and which have an inclined flat surface 33 in the front part of the cylindrical body 28 (See Fig. 6). The cylindrical body 28 has a front surface 35 with a frusto-conical outline 36 and joined with a central flat cylindrical surface 37.

The rollers 13 are made integral of plastic material or other rigid material suitable to withstand high pressures and are constituted by cylinders 38 with an axial central through hole 39, and have such a size that to be able to be coupled each one in a sliding manner and transversally in the interior of the relative slots 31 of the closing cover 12 that is arranged into contact with the inclined flat surface 33.

Said half-pulley 11' is formed by a cylindrical body 40 with a central axial hole 41 and a frusto-conical surface 42, with shape and dimension identical and symmetrical to the frusto-conical surface 17 of the movable half-pulley 11.

The hub 14, on to which the pulley assembly 10 is assembled as it will be described, is mounted rotatable on to a motor vehicle (not shown) and is actuated in rotation by the respective motor (not shown), in such a way as to impart a rotating movement to said pulley assembly 10 that, thanks to a trapezoidal transmission belt (not shown), actuates in rotation the back pulley (not shown) mounted on to the hub of the driving wheel of the same vehicle.

The half-pulley 11' is coupled with the hub 14 with its hole 41 and splined to the part of the same hub 14 turned toward the vehicle (not shown) onto which it is mounted, and with the frusto-conical surface 42 turned outward, in such a way that such a half-pulley 11' be integrally connected in rotation to the hub 14 and could not slide longitudinally.

The movable half-pulley 11 is inserted on to the hub 14 through its central hole 16 and a bearing 43 housed on to the same hub, in such a way that it may rotate and shift longitudinally in an independent way with respect to the same hub and that the frusto-conical surface 17 be turned toward the frusto-conical surface 42.

The central closing cover 12 is splined abutting on to the external end portion 44 of the hub 14, through its central holes 29 and 34, in such a way that it is integrally connected in rotation to the same hub and could not slide longitudinally with respect to said hub.

Furthermore, the closing cover 12 is joined with the movable half-pulley 11, in such a way that the central cylindrical body 22 slides into the hole 34 and that the vertical and radial portions 31' with a triangular or trapezoidal base be able to be coupled perfectly with the circular groove 27.

Finally, as already described, into each one of the slots 31 there are inserted the rollers 13 in a transversal manner, in such a way that they may roll into contact on to the inclined surface 33 and the circular groove 27, however without being able to be moved transversally.

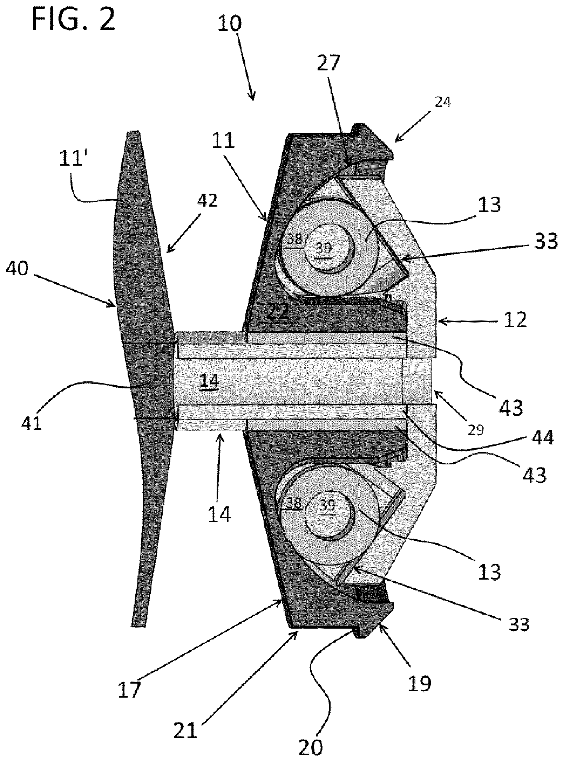

As soon as the said pulley assembly 10 has been mounted onto the motor vehicle (not shown), and a classic trapezoidal transmission belt (not shown) has been applied slidable between the stationary half-pulley 11' and the movable half-pulley 11, a starting position is obtained, which is shown in the Fig.2, in which the cylinder 22 of the movable half-pulley 11 is abutting on the hole 29 of the closing cover and the rollers 13 are positioned adjacent to the base of said cylinder 22.

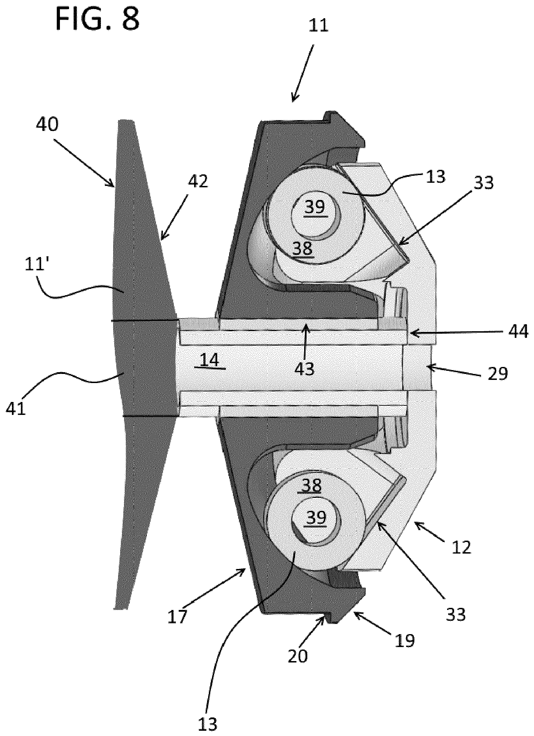

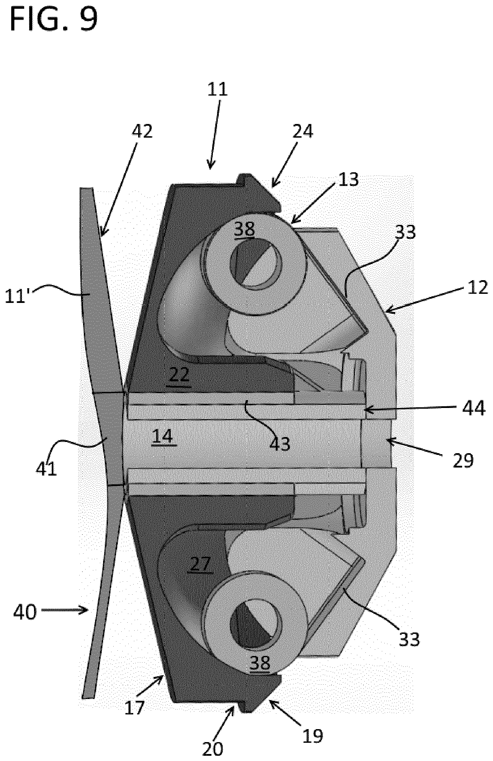

When the rpm of the vehicle motor are increasing, thanks to the centrifugal force the rollers 13 tend to be moved away from the central cylindrical body 22 by sliding on to the inclined surface 33 of the cover 12 and on to the surface with variable radius of the circular groove 27 of the half-pulley 11, by letting to slide longitudinally this latter on to the hub 14 and thereby by forcing the half-pulley 11 to be moved away from the cover 12 and to be approached to the stationary half-pulley 11'. As the rpm of the hub 14 are increasing, the distance between the half-pulley 11 and the cover 12 increases, by passing through intermediate positions as shown in Fig. 8, up to a final position, as shown in fig. 9, in which the rollers 13 reach the junction between the circular groove 27 and the internal surface 25 of the perimeter 18.

When the rpm of the hub 14 are decreasing, the pulley assembly 10 returns back in the starting position thereof, shown in Fig. 2.

In this way, by acting with the simple centrifugal force applied to the rollers 14, the shifting of such a movable half-pulley 11 toward the stationary half-pulley 11' or in the opposite direction thereof, provides to change the rotation diameter of the transmission trapezoidal belt, thereby by changing consequently the gear ratio in an automatic manner.

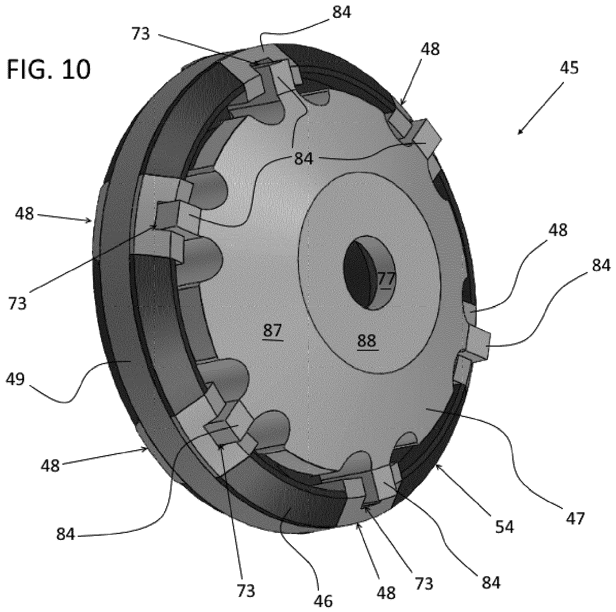

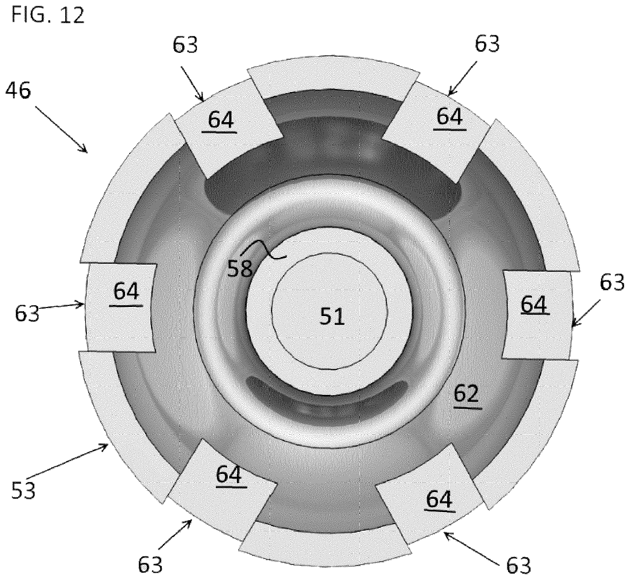

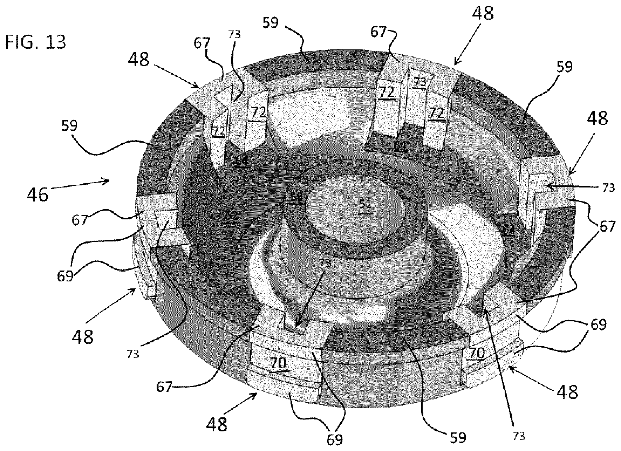

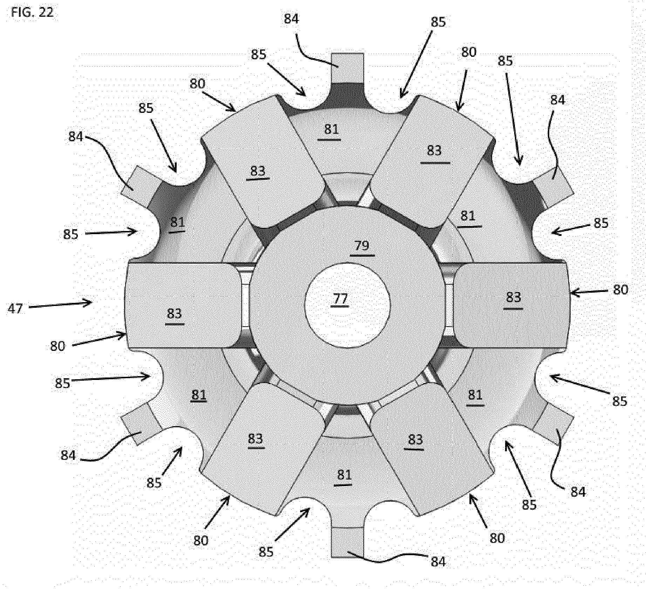

Now, with reference to the Figs. 10-22, a second embodiment of the pulley assembly is described, which is used in the case in which the rotation of the movable half-pulley be produced by the closing cover.

Such a pulley assembly 45 is always fixed onto a hub 14 and is substantially constituted by a movable half-pulley 46, coupled with a closing cover 47 through guide means 48, kept into position by a circular fixing means 49, by some rollers 13 inserted into said half-pulley 26 and closing cover 47, and by a stationary half-pulley 11, mounted like in the first embodiment of the pulley assembly 10.

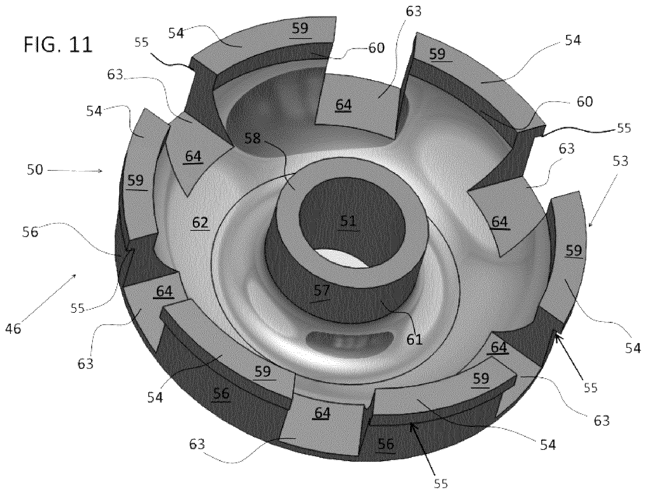

Such a half-pulley 46, shown in the Figs. 11-12, is constituted integral of metallic material by a cylindrical body 50, with an axial through central hole 51, such a body 50 having at the back part thereof a frusto-conical surface 52 and at the front part thereof having along its perimeter 53 a peripheral flat or conical surface 54, provided with an underlying orthogonal step 55, that is joined with a cylindrical surface 56 to the conical surface 52. In the front part of the body 50 a central cylinder 57 is provided centrally and axially to the hole 51, the external beveled or flat surface 58 of which is slightly projected with respect to the external edge 59 of the flat or conical surface 54. Such perimeter 53 and the base of the central cylinder 57 are shaped respectively with an internal flat surface 60 and an external flat surface 61, of which the first one has a length smaller than the second one, and which are joined to each other through a circular groove 62 with a curved outline with a variable radius, having a greater curving radius in correspondence of the junction with the flat surface 60 and a smaller curving radius in correspondence of the junction with the flat surface 61. Along the cylindrical surface 56, a set of depressed slots 63 with a flat base 64 is provided radially and equally spaced away from each other along the entire said perimeter and extended from the peripheral surface 54 near to the base of the circular groove 62.

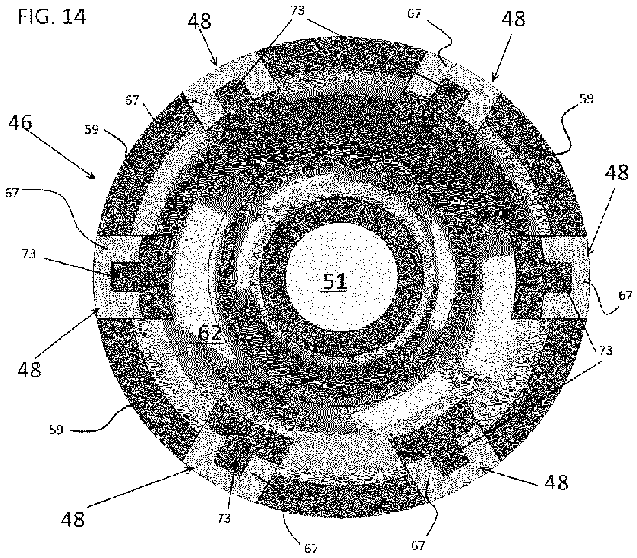

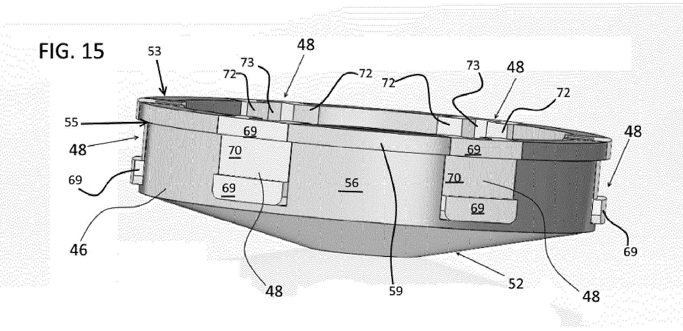

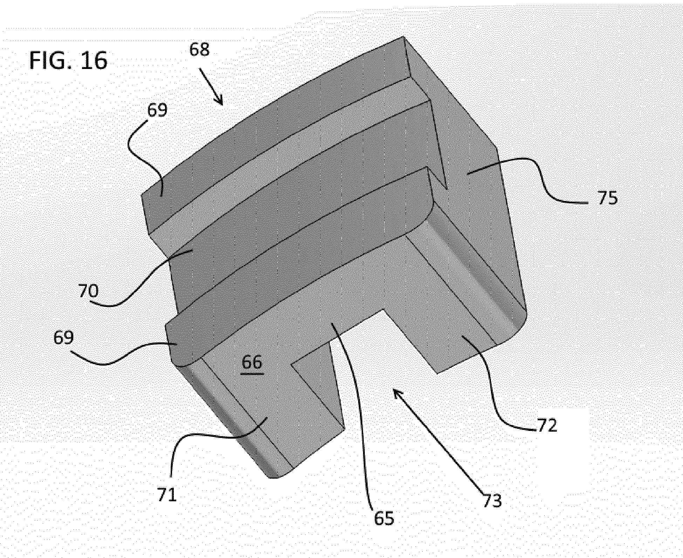

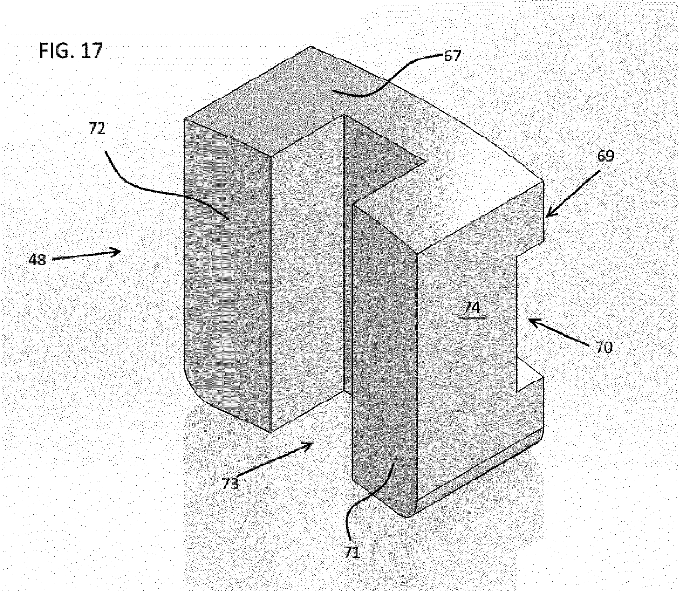

Said guide means 48 are inserted into said slots 63 (See Figs. 14, 15), which means 48 (See Figs. 16, 17) are provided integral with hard material such as for example plastic or metallic material, through machining with machine tools, and are substantially constituted by a lengthened central part 65, with flat lower surfaces 66 and upper surfaces 67, with the external part 68 constituted by a surface 69 with the same curvature radius of the perimeter 53 having a flat longitudinal groove 70 for its entire length with the same curvature radius of the cylindrical surface 56, and with the internal part provided with two side walls 71 and 72 identical to each other with a height almost equal to those ones of the slots 63, perpendicular to said surfaces 68 and delimiting a rectilinear central groove 73 transversal and central with respect to said groove 70.

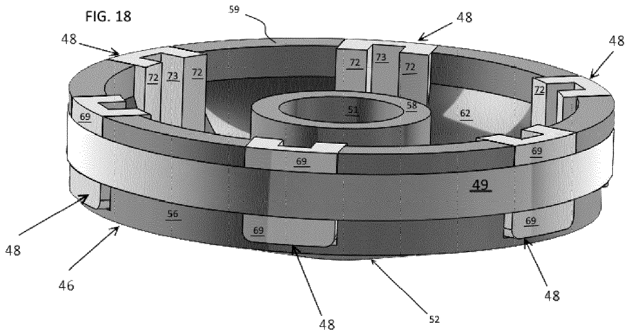

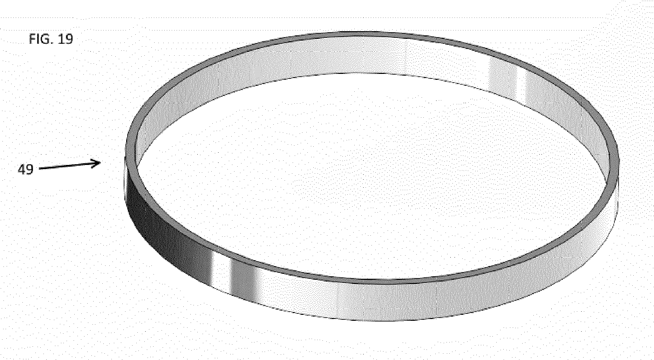

Such guide means 48 are inserted into said slots 63, with their lower surface 66 into contact with the flat base 64, and the side surfaces 74 and 75 of the walls 71 and 72 into contact with the walls of the same slots 63, and in such a way that the surface 69 coincides with the perimeter 53, that the groove 70 coincides with the cylindrical surface 56, and that the groove 73 be parallel to the central hole 51. Said guide means 48 are blocked by said fixing means 49 (See Fig. 18), which, as shown in Fig. 19, is constituted by a ring 49 with an internal curvature radius identical to the one of the cylindrical surface 56 and a height slightly smaller than the one of the groove 70, and is arranged externally into contact on to said cylindrical surface 56, by abutting on the orthogonal step 55, and inserted into the grooves 70 of the guides 48.

Such a ring 49 is so blocked in the interior of said grooves 70 and does not allow axial and outwards movements of the same guides 48.

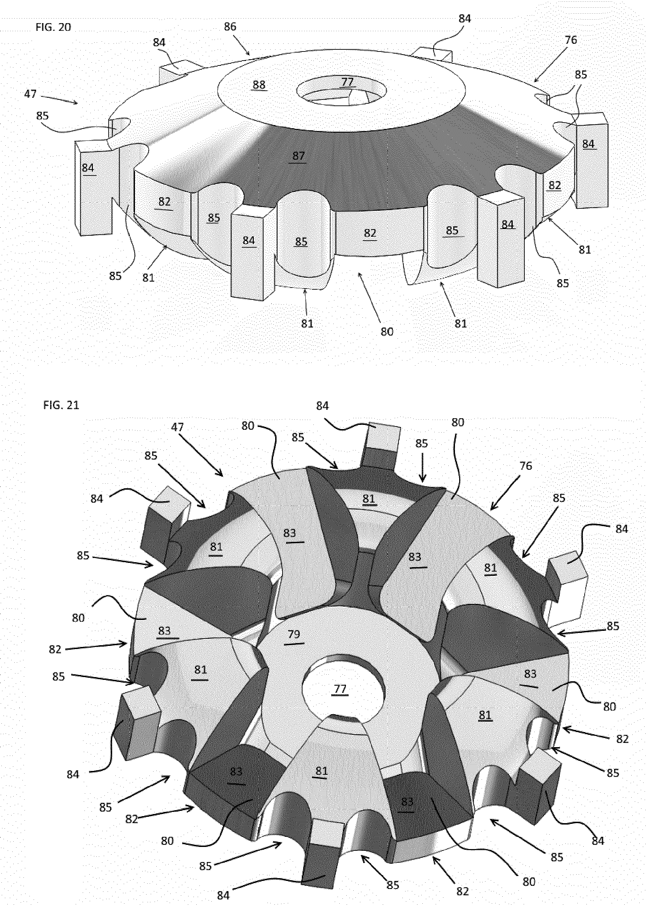

Said front closing cover 47, represented singularly in the Figs. 20-22, is made integral of metallic material through machining with machine tools, and is constituted substantially by a cylindrical body 76 with a first axial central through hole 77. Such a cylindrical body 76 has at the back part thereof a surface 78 tapered centrally for forming a second central hole 79, with a greater diameter than the first central hole 77 and concentric thereto. Such a back surface 78 has a flat inclined outline or an outline with variable radius, having such dimension and shape as to be able to be coupled with the circular groove 62 of the first half-pulley 45, without coming into contact therewith, and has also a set of depressed slots 80 provided radially along the entire surface 78 and spaced away to each other, by creating some vertical and radial portions with a triangular or a trapezoidal base 81, that are extended from the external circumference 82 of the cylindrical body 76 to near the central hole 79, and which slots 80 have an inclined flat surface 83 in the front part of the cylindrical body 76 (See Fig. 21).

Said portions 81 have each a central parallelepiped portion 84 external to the circumference 82, delimited by two semi-cylindrical side grooves 85 parallel and identical to each other.

The cylindrical body 76 has a frontal surface 86 with a frusto-conical outline 87 and joined with a central flat cylindrical surface 88.

The movable half-pulley 46 is inserted on to the hub 14 through its central hole 51 and the bearing 43 housed on to the same hub, as in the first embodiment of the pulley assembly, in such a way that it may rotate and shift longitudinally in an independent way with respect to the same hub and that the frusto-conical surface 52 be turned toward the frusto-conical surface 42.

The central closing cover 47 is splined abutting on the external end portion 44 of the hub 14 through its central holes 77 and 79, in such a way that it be integrally connected in rotation to the same hub and can't shift longitudinally with respect to said hub.

Furthermore, the closing cover 47 is joined with the movable half-pulley 46, in such a way that the central cylindrical body 50 be slidable into the hole 79 and that the vertical and radial portions 81 with a triangular or trapezoidal base could be coupled perfectly with the circular groove 62, and that each portion 78 be slidable perfectly into a relative groove 73, so that the half-pulley 46 and the cover 47 be made integral in rotation, but independent in the axial translation thereof.

Finally, as described, into each one of the slots 80 there are inserted the rollers 13 in a transversal manner, in such a way that they may roll into contact on to the inclined surface 83 and onto the circular groove 62, however without being able to move themselves transversally.

In this way, by obtaining with machine tools with high accuracy the entire pulley assembly, it is increased the accuracy thereof and therefore the operation and the interaction of the various component parts, contrary to the fact that such an assembly would be made with a die casting process, as it has been done hitherto.

Furthermore, by obtaining a groove with a sole surface with a variable radius onto the movable half-pulley, the machining to be effected for obtaining the same is simplified, and this radius could be changed easily depending on the operative needs of the final user.

## Claims

1. Pulley assembly (10, 45) for a stepless speed change gear CVT, adapted to be applied to motor vehicles, in particular motorcycles, such as for example scooters or mini-motorcycles, which can be manufactured easily and quickly, which assembly (10, 45) is composed substantially by a first movable half-pulley (11, 46), a second stationary half-pulley (11'), a front closing cover (12, 47), a set of rolling elements such as for example rollers (13), and a hub (14), on to which said pulley assembly (10, 45) is assembled, which hub (14) can be mounted rotatable on to the motor vehicle and be driven in rotation by the respective motor, in such a way that to impart a rotary movement to said pulley assembly (10, 45) that, thanks to a transmission belt, can actuate in rotation a back pulley mounted on to a hub of a driving wheel of the same vehicle, said movable half-pulley (11, 46) being constituted integral of metallic material from a cylindrical body (15, 50) having in the back part a frusto-conical surface (17, 52) and being inserted in the hub (14) in such a manner that it can rotate and translate longitudinally in an independent way with respect to the same hub, and that the frusto-conical surface (17, 52) be turned toward the motor vehicle, said movable half-pulley (11, 46) being moreover coupled with the closing cover (12, 47), by enclosing between them the set of rollers (13), said closing cover (12, 47) being secured abutting on an external end portion (44) of the hub (14) in such a way as to be integrally connected in rotation with the same hub and not to translate longitudinally with respect to the same hub, said stationary half-pulley (11') being formed by a cylindrical body (40) with a central axial hole (41) and a frusto-conical surface (42) with shape and dimension identical to the frusto-conical surface (17, 52) of the first movable half-pulley (11, 46), and being coupled to the hub (14) with its hole (41) and splined to the part of the same hub turned toward the vehicle onto which it can be mounted, and with the frusto-conical surface (42) turned outward mirrorlike to said frusto-conical surface (17, 52) of the first movable half-pulley (11, 46), in such a manner that said stationary half-pulley (11') is integral in rotation longitudinally, said rollers (13) being made integral of plastic material or other rigid material suitable to withstand high pressures and are constituted by cylinders (38) with an axial central through hole (39), **characterized in that** the cylindrical body (15, 50) of said movable half-pulley (11, 46) is provided with an axial central through hole (16, 51) and at the back part thereof has said frusto-conical surface (17, 52) and frontally has along its perimeter (18, 53) a peripheral flat or conical surface (19, 54) provided with an underlying orthogonal step (20, 55), that is joined with a cylindrical surface (21, 56) to the frusto-conical surface (17. 52), in the front part of the cylindrical body (15, 50) axially to the hole (16, 51) being provided centrally a central cylinder (22, 57), the external flat or beveled end portion (23, 58) of which is slightly projected with respect to the external edge (24, 59) of the flat or conical surface (19, 54), said perimeter (18, 53) and a base of the central cylinder (22, 57) being shaped respectively with an internal flat surface (25, 60) and an external flat surface (26, 61), of which the first one has a length smaller than the second one, and which are joined to each other through a circular groove (27, 62) with a curved outline with a variable radius, having a greater curving radius in correspondence of the junction with the internal flat surface (25, 60) and a smaller curving radius in correspondence of the junction with the external flat surface (26, 61), said movable half-pulley (11, 46) being therefore inserted on to the hub (14) through its central hole (16, 51) and a bearing (43) housed on to the same hub, in such a way that it may rotate and shift longitudinally in an independent way with respect to the same hub, **in that** said front closing cover (12, 47) is manufactured integral of metallic material and substantially constituted by a cylindrical body (28, 76) with a first axial central through hole (29, 77), said cylindrical body (28, 76) having at its back part a surface (30, 78) tapered centrally for forming a second central hole (34, 79) with a diameter greater than the first central hole (29, 77) and concentric thereto, said back surface (30, 78) in turn having an inclined flat outline or with a variable radius with such dimension and shape as to be able to be coupled with the circular groove (27, 62) of the first movable half-pulley (11, 46), and having also a set of depressed slots (31, 80) provided radially along the entire surface (30, 78) and spaced away to each other, by creating some vertical and radial portions (31', 81) having a triangular or trapezoidal base, that are extended from the external circumference (32, 82) of the cylindrical body (28, 76) up to near the second central hole (34, 79), and which have an inclined flat surface (33, 83) in the front part of the cylindrical body (28, 76), this latter cylindrical body (28, 76) having a front surface (35, 86) with a frusto-conical outline (36, 87) and joined with a central flat cylindrical surface (37, 88), said front closing cover (12, 47) being then splined abutting on to the external end portion (44) of the hub (14) through its central holes (29, 34 ; 77, 79), in such a way that it is integrally connected in rotation to the same hub and cannot slide longitudinally with respect to said hub, and that it is joined with the movable half-pulley (11, 46) in such a way that the central cylindrical body (22, 57) is slidable into the second central hole (34, 79) and that the vertical and radial portions (31', 81) can be coupled perfectly with the circular groove (27, 62), **and in that** said rollers (13) have such a size that to be able to be coupled each one in a sliding manner and transversally in the interior of the relative slots (31, 80) of the closing cover (12, 47) and be arranged into contact with the inclined flat surface (33, 83), so that they can roll into contact on to such inclined surface (33, 83) and the circular groove (27, 62), however without being displaceable transversally thereto.

2. Pulley assembly according to claim 1, **characterized in that** in said pulley assembly (45) the rotation of the movable half-pulley (46) is produced by the closing cover (47), and along the cylindrical surface (56) of the half-pulley (46) a set of depressed slots (63) with a flat base (64) is provided radially and equally spaced away from each other along the entire said perimeter and extended from the peripheral surface (54) near to the base of the circular groove (62), and adapted to house some guide means (48), each one provided with a rectilinear groove (73) and kept in position by a circular fixing means (49), such grooves (73) being positioned parallel to the central hole (51) of the body (50) and being adapted to house in a slidable manner said closing cover (47), of which each portion (81) has a central parallelepiped portion (84) external to the circumference (82), each one inserted in the same groove (73) in such a way that the cover (47) is made integral in rotation with the movable half-pulley (46), however by permitting said movable half-pulley (46) to slide longitudinally along the hub (14).

3. Pulley assembly according to claim 2, **characterized in that** the guide means (48) are provided integral with hard material such as for example plastic or metallic material, through machining with machine tools, and are substantially constituted by a lengthened central part (65), with flat lower surfaces (66) and upper surfaces (67), with the external part (68) constituted by a surface (69) with the same curvature radius of the perimeter (53) having a flat longitudinal groove (70) for its entire length with the same curvature radius of the cylindrical surface (56), and with the internal part provided with two side walls (71 and 72) identical to each other with a height almost equal to those ones of the slots (63), perpendicular to said surfaces (68) and delimiting said central groove (73) transversal and central with respect to said groove (70), said guide means (48) being then inserted into said slots (63), with their lower surface (66) into contact with the flat base (64), and the side surfaces (74 and 75) of the walls (71 and 72) into contact with the walls of the same slots (63), and in such a way that the surface (69) coincides with the perimeter (53), and the groove (70) with the cylindrical surface (56).

4. Pulley assembly according to claim 2, **characterized in that** said fixing means (49) is constituted by a ring (49) with an internal curvature radius identical to the one of the cylindrical surface (56) and a height slightly smaller than the one of the groove (70), and is arranged externally into contact on to said cylindrical surface (56), by abutting on the orthogonal step (55), and inserted into the grooves (70) of the guides (48), said ring (49) being so blocked in the interior of said grooves (70) that it does not allow axial and outwards movements of the guides (48).

5. Pulley assembly according to claim 2, **characterized in that** each one of said central parallelepiped portions (84) of the portions (81) of the closing cover (47) is delimited by two semi-cylindrical side grooves (85) parallel and identical to each other.

## Patentansprüche

1. Scheibenanordnung (10, 45) für ein stufenloses Getriebe CVT, das geeignet ist, bei einem Kraftfahrzeug, insbesondere einem Motorrad, wie beispielsweise Scooter oder Mini-Motorrädern angewendet zu werden, die leicht und schnell herstellbar ist, wobei die Anordnung (10, 45) im wesentlichen aus einer ersten beweglichen Halb-Scheibe (11, 46), einer zweiten stationären Halb-Scheibe (11'), einem vorderen Schließdeckel (12, 47), einem Satz Rollelemente, wie beispielsweise Rollen (13) und einer Nabe (14) besteht, auf der die Scheibenanordnung (10, 45) angeordnet ist, wobei die Nabe (14) drehbar an dem Kraftfahrzeug befestigt sein und von einem zugehörigen Motor in Rotation angetrieben sein kann, auf solche Weise, dass eine Drehbewegung auf die Scheibenanordnung (10, 45) übertragen wird, die über einen Treibriemen eine hintere Scheibe in Rotation versetzen kann, die auf einer Nabe eines Antriebsrades des Kraftfahrzeugs befestigt ist, wobei die bewegliche Halb-Scheibe (11, 46) integral aus einem metallischen Material aus einem zylindrischen Körper (15, 50) gebildet ist, der in dem hinteren Teil eine kegelstumpfförmige Fläche (17, 52) hat und auf solche Weise in die Nabe (14) eingesetzt ist, dass sie auf unabhängige Weise bezüglich der Nabe rotieren und longitudinal bewegt werden kann, und dass die kegelstumpfförmige Fläche (17, 52) zu dem Kraftfahrzeug gerichtet ist, wobei die bewegliche Halb-Scheibe (11, 46) zudem mit dem Schließdeckel (12, 47) gekoppelt ist, indem zwischen diesen der Satz Rollen (13) eingeschlossen ist, wobei der Schließdeckel (12, 47) befestigt ist, indem er an einem äußeren Endabschnitt (44) der Nabe (14) auf solche Weise anliegt, dass er integral in Rotation mit der Nabe verbunden ist und nicht in Längsrichtung zu der Nabe bewegbar ist, wobei die stationäre Halb-Scheibe (11') durch einen zylindrischen Körper (40) mit einem zentralen axialen Loch (41) und einer kegelstumpfförmigen Fläche (42), gebildet ist, deren Form und Abmessungen identisch zu der kegelstumpfförmigen Fläche (17, 52) der ersten beweglichen Halb-Scheibe (11, 46) ist, und die mit der Nabe (14) mit ihrem Loch (41) gekoppelt und mit dem Teil der Nabe verzahnt ist, der zu dem Fahrzeug gerichtet ist, an dem sie befestigt sein kann, wobei die kegelstumpfförmige Fläche (42) spiegelförmig zu der kegelstumpfförmigen Fläche (17, 52) der ersten beweglichen Halb-Scheibe (11, 46) nach außen gerichtet ist, auf solche Weise, dass die stationäre Halb-Scheibe (11') integral in Längsrichtung in Rotation ist, wobei die Rollen (13) integral aus Kunststoffmaterial oder einem anderen starren Material bestehen, das geeignet ist, hohen Drücken zu widerstehen und durch Zylinder (38) mit zentralen axialen Durchgangslöchern (39) gebildet sind,
**dadurch gekennzeichnet,**
**dass** der zylindrische Körper (15, 50) der beweglichen Halb-Scheibe (11, 46) mit einem zentralen axialen Durchgangsloch (16, 51) versehen ist und an seinem rückwärtigen Teil die kegelstumpfförmige Fläche (17, 52) hat und frontal entlang seines Umfangs (18, 53) eine flache periphäre oder konische Fläche (19, 54) hat, die mit einer unteren orthogonalen Stufe (20, 55) versehen ist, die mit einer zylindrischen Fläche (51, 56) an die kegelstumpfförmige Fläche (17, 52) anschließt, wobei in dem vorderen Teil des zylindrischen Körpers (15, 50) axial zu dem Loch (16, 51) zentral ein zentraler Zylinder (22, 57) vorgesehen ist, dessen außen flacher oder abgeschrägter Endabschnitt (23, 58) etwas gegenüber dem äußeren Rand (24, 59) der flachen oder konischen Fläche (19, 54) vorsteht, wobei der Umfang (18, 53) und eine Basis des mittigen Zylinders (22, 57) mit einer inneren flachen Fläche (25, 60) und einer äußeren flachen Fläche (26, 61) geformt ist, wobei die erstere eine Länge hat, die kleiner als die zweite ist, und die über eine kreisförmige Nut (27, 62) mit einer gekrümmten Außenlinie mit einem variablen Radius miteinander verbunden sind, der einen größeren Kurvenradius bezüglich der Verbindung mit der inneren flachen Fläche (25, 60) und einen kleineren Kurvenradius bezüglich der Verbindung mit der äußeren flachen Fläche (26, 61) hat, wobei die bewegliche Halb-Schale (11, 46) deshalb auf die Nabe (14) durch ihr zentrales Loche (16, 51) aufgesetzt ist und ein Lager (43) auf der Nabe auf solche Weise eingeschlossen ist, dass sie gegenüber der Nabe auf unabhängige Weise rotieren kann und in Längsrichtung verlagert werden kann,
**dass** der vordere Schließdeckel (12, 47) integral aus metallischem Material hergestellt ist und im wesentlichen durch einen zylindrischen Körper (28, 76) gebildet ist, mit einem ersten mittigen axialen Durchgangsloch (29, 77), wobei der zylindrische Körper (28, 76) an seinem hinteren Teil eine Fläche (30, 78) hat, die zentral zur Bildung eines zweiten zentralen Lochs (34, 79) mit einem Durchmesser, der größer ist als das erste zentrale Loch (29, 77), abgeschrägt ist, und konzentrisch mit diesem, wobei die hintere Fläche (30, 78) ihrerseits eine geneigte flache Außenlinie hat oder mit einem variablen Radius mit solcher Dimension und Form, dass sie mit der kreisförmigen Nut (27, 62) der ersten beweglichen Halb-Scheibe (11, 46) gekoppelt werden kann, und einen Satz vertiefter Schlitze (31, 80) hat, die radial entlang der gesamten Fläche (30, 78) voneinander beabstandet vorgesehen sind, indem einige vertikale und radiale Abschnitte (31', 81) mit einer dreieckigen oder trapezförmigen Basis gebildet sind, die sich von dem äußeren Umfang (32, 82) des zylindrischen Körpers (28, 76) bis nahe des zweiten zentralen Lochs (34, 79) erstrecken und die eine geneigte flache Fläche (33, 83) in dem vorderen Teil des zylindrischen Körpers (28, 76) haben, wobei der letztere zylindrische Körper (28, 76) eine vordere Fläche mit einer kegelstumpfförmigen Außenlinie (36, 87) hat und mit einer zentralen flachen zylindrischen Fläche (37, 88) verbunden ist, wobei der vordere Schließdeckel (12, 47) verzahnt an dem äußeren Endabschnitt (44) der Nabe (14) durch seine zentralen Löcher (29, 34; 77, 79) auf solche Weise anliegt, dass er integral drehbar mit der Nabe verbunden ist und nicht longitudinal zu der Nabe gleiten kann, und dass er mit der beweglichen Halb-Scheibe (11, 46) auf solche Weise verbunden ist, dass der zentrale zylindrische Körper (22, 57) verschieblich in dem zweiten zentralen Loch (34, 79) ist und dass die vertikalen und radialen Abschnitte (31', 81) perfekt mit der kreisförmigen Nut (27, 62) gekoppelt werden können,
und **dass** die Rollen (13) eine Größe haben, dass sie auf gleitbare Weise und quer in dem Inneren der zugehörigen Schlitze (31, 80) des Schließdeckels (12, 47) gekoppelt werden können und in Kontakt mit der schrägen flachen Fläche (33, 83) angeordnet sind, so dass sie in Kontakt mit der geneigten Fläche (33, 83) und der kreisförmigen Nut (27, 62) rollen können, ohne in Querrichtung hierzu verlagerbar zu sein.

2. Scheibenanordnung nach Anspruch 1,
**dadurch gekennzeichnet,**
**dass** bei der Scheibenanordnung (45) die Rotation der beweglichen Halb-Scheibe (46) durch den Schließdeckel (47) hervorgerufen wird und entlang der zylindrischen Fläche (56) der Halb-Scheibe (46) ein Satz von eingedrückten Schlitzen (63) mit einer flachen Basis (64) radial und gleichmäßig voneinander beabstandet entlang des gesamten Umfangs ausgebildet ist und sich von der Umfangsfläche (54) nahe der Basis der kreisförmigen Nut (62) erstreckt, und geeignet ist, um einige Führungsmittel (48) unterzubringen, die jeweils mit einer geradlinigen Nut (73) versehen sind und durch kreisförmige Fixiermittel (49) in Position gehalten sind, wobei diese Nuten (73) parallel zu dem mittigen Loch (51) des Körpers (50) positioniert sind und geeignet sind, auf eine gleitbare Weise den Schließdeckel einzuschließen, von dem jeder Abschnitt (81) einen zentralen parallel Pipedon-förmigen Abschnitt (84) außen zu der Umfangsfläche (82) hat und in die Nut (73) auf solche Weise eingesetzt ist, dass der Deckel (47) integral in Rotation mit der beweglichen Halb-Scheibe (46) gemacht ist, wobei die bewegliche Halb-Scheibe (46) longitudinal entlang der Nabe (14) gleiten kann.

3. Scheibenanordnung nach Anspruch 2,
**dadurch gekennzeichnet,**
**dass** Führungsmittel (48) integral mit hartem Material wie beispielsweise Kunststoff oder metallischem Material vorgesehen sind durch Bearbeitung mit Maschinenwerkzeugen und im wesentlichen durch einen länglichen zentralen Teil (65) gebildet sind mit flachen unteren Flächen (66) und oberen Flächen (67), wobei der äußere Teil (68) durch eine Fläche (69) mit demselben Kurvenradius des Durchmessers (53) gebildet ist mit einer flachen längsgerichteten Nut (70) über seine gesamte Länge mit demselben Kurvenradius der zylindrischen Fläche (56) und wobei der innere Teil mit zwei Seitenwänden (71 und 72) versehen ist, die identische zueinander sind mit einer Höhe, die fast gleich ist der Höhe der Schlitze (63) senkrecht zu den Flächen (68), und die zentrale Nut (73) in Querrichtung und zentral bezüglich der Nut (70) begrenzen, wobei Führungsmittel (48) in die Schlitze (63) eingesetzt sind mit ihrer unteren Fläche (66) in Kontakt mit der flachen Basis (64), und die Seitenflächen (74 und 75) der Wände (71 und 73) in Kontakt mit den Wänden derselben Schlitze (63) stehen, auf solche Weise, dass die Fläche (69) mit dem Umfang (53) und die Nut (70) mit der zylindrischen Fläche (56) übereinstimmen.

4. Scheibenanordnung nach Anspruch 2,
**dadurch gekennzeichnet,**
**dass** Fixiermittel (49) durch einen Ring (49) mit einem inneren Kurvenradius gebildet sind, der identisch mit dem der zylindrischen Fläche (56) ist und eine Höhe hat, die etwas kleiner ist als diejenige der Nut (70) und nach außen in Kontakt mit der zylindrischen Fläche (56) angeordnet sind, indem sie an der orthogonalen Stufe (55) anliegen und in die Nuten (70) der Führungen (48) eingesetzt sind, wobei der Ring (49) so in dem Inneren der Nuten (70) blockiert ist, dass er keine axiale und nach außen gerichteten Bewegungen der Führungen (48) erlaubt.

5. Scheibenanordnung nach Anspruch 2,
**dadurch gekennzeichnet,**
**dass** jeder der mittigen parallel Pipedon-förmigen Abschnitte (84) der Abschnitte (81) des Schließdeckels (47) begrenzt ist durch zwei halbzylindrische seitliche Nuten (85), die parallel und identisch zueinander sind.

## Revendications

1. Ensemble de poulie (10, 45) pour une transmission à variation continue CVT, adapté pour être appliqué sur des véhicules à moteur, en particulier des motocyclettes, tels par exemple que des scooters ou des mini-motos, qui peut être fabriqué facilement et rapidement, lequel ensemble (10, 45) est composé sensiblement par une première demi-poulie mobile (11, 46), une seconde demi-poulie fixe (11'), un couvercle de fermeture avant (12, 47), un ensemble d'éléments de roulement, tels que par exemple des rouleaux (13), et un moyeu (14), sur lequel ledit ensemble de poulie (10, 45) est assemblé, lequel moyeu (14) peut être monté, en rotation, sur le véhicule à moteur et être entraîné, en rotation, par le moteur respectif, afin de communiquer un mouvement de rotation audit ensemble de poulie (10, 45) qui, grâce à une courroie de transmission, peut actionner, en rotation, une poulie arrière montée sur un moyeu d'une roue motrice du même véhicule, ladite demi-poulie mobile (11, 46) étant constituée, de manière solidaire, avec un matériau métallique à partir d'un corps cylindrique (15, 50) ayant, dans la partie arrière, une surface tronconique (17, 52) et étant insérée dans le moyeu (14) de sorte qu'elle peut tourner et effectuer un mouvement de translation longitudinal indépendant par rapport à ce même moyeu, et en ce que la surface tronconique (17, 52) est tournée vers le véhicule à moteur, ladite demi-poulie mobile (11, 46) étant de plus couplée avec le couvercle de fermeture (12, 47), en enfermant entre eux, l'ensemble de rouleaux (13), ledit couvercle de fermeture (12, 47) étant fixé en butée sur une partie d'extrémité externe (44) du moyeu (14) afin d'être raccordé de manière solidaire en rotation avec ce même moyeu et ne pas effectuer un mouvement de translation longitudinal par rapport à ce même moyeu, ladite demi-poulie fixe (11') étant formée par un corps cylindrique (40) avec un trou axial central (41) et une surface tronconique (42) avec une forme et une dimension identiques à la surface tronconique (17, 52) de la première demi-poulie mobile (11, 46) et étant couplée au moyeu (14) avec son trou (41) et cannelée sur la partie du même moyeu orientée vers le véhicule sur lequel elle peut être montée, et avec la surface tronconique (42) orientée en miroir vers l'extérieur vers ladite surface tronconique (17, 52) de la première demi-poulie mobile (11, 46), de sorte que ladite demi-poulie fixe (11') est solidaire, en rotation, longitudinalement, lesdits rouleaux (13) étant réalisés, de manière solidaire, avec une matière plastique ou un autre matériau rigide approprié pour résister aux hautes pressions et sont constitués par des cylindres (38) avec un trou débouchant central axial (39), **caractérisé en ce que** le corps cylindrique (15, 50) de ladite demi-poulie mobile (11, 46) est prévu avec un trou débouchant central axial (16, 51) et au niveau de sa partie arrière, a ladite surface tronconique (17, 52) et frontalement a, le long de son périmètre (18, 53), une surface plate ou conique périphérique (19, 54) prévue avec un gradin orthogonal sous-jacent (20, 55) qui est assemblé avec une surface cylindrique (21, 56) à la surface tronconique (17, 52), dans la partie avant du corps cylindrique (15, 50) axialement par rapport au trou (16, 51), on prévoit de manière centrale, un cylindre central (22, 57), dont la partie d'extrémité plate ou biseautée externe (23, 58) fait légèrement saillie par rapport au bord externe (24, 59) de la surface plate ou conique (19, 54), ledit périmètre (18, 53) et une base du cylindre central (22, 57) étant respectivement formés avec une surface plate interne (25, 60) et une surface plate externe (26, 61), dont la première a une longueur inférieure à la seconde, et qui sont assemblées entre elles par le biais d'une rainure circulaire (27, 62) avec un contour incurvé avec un rayon variable, ayant un rayon de courbure supérieur en correspondance de la jonction avec la surface plate interne (25, 60) et un rayon de courbure inférieur en correspondance de la jonction avec la surface plate externe (26, 61), ladite demi-poulie mobile (11, 46) étant par conséquent insérée sur le moyeu (14) à travers son trou central (16, 51) et un palier (43) logé sur ce même moyeu, de sorte qu'il peut tourner et se décaler longitudinalement d'une manière indépendante par rapport à ce même moyeu, **en ce que** ledit couvercle de fermeture avant (12, 47) est fabriqué de manière solidaire avec un matériau métallique et est sensiblement constitué pour un corps cylindrique (28, 76) avec un premier trou débouchant central axial (29, 77), ledit corps cylindrique (28, 76) ayant, au niveau de sa partie arrière, une surface (30, 78) progressivement rétrécie de manière centrale pour former un second trou central (34, 79) avec un diamètre supérieur au premier trou central (29, 77) et concentrique avec ce dernier, ladite surface arrière (30, 78) ayant, à son tour, un contour plat incliné ou un rayon variable avec une dimension et une forme telles qu'elle peut être couplée avec la rainure circulaire (27, 62) de la première demi-poulie mobile (11, 46) et ayant également un ensemble de fentes enfoncées (31, 80) prévues de manière radiale le long de toute la surface (30, 78) et espacées les unes des autres, en créant certaines parties verticale et radiale (31', 81) ayant une base triangulaire ou trapézoïdale, qui sont étendues à partir de la circonférence externe (32, 82) du corps cylindrique (28, 76) jusqu'à proximité du second trou central (34, 79) et qui ont une surface plate inclinée (33, 83) dans la partie avant du corps cylindrique (28, 76), ce dernier corps cylindrique (28, 76) ayant surface avant (35, 86) avec un contour tronconique (36, 87) et étant assemblé avec une surface cylindrique plate centrale (37, 88), ledit couvercle de fermeture avant (12, 47) venant ensuite en butée par cannelure sur la partie d'extrémité externe (44) du moyeu (14) à travers ses trous centraux (29, 34 ; 77, 79), de sorte qu'il est raccordé, de manière solidaire, en rotation, à ce même moyeu et ne peut pas coulisser longitudinalement par rapport audit moyeu, et **en ce qu'**il est assemblé avec la demi-poulie mobile (11, 46) de sorte que le corps cylindrique central (22, 57) peut coulisser dans le second trou central (34, 79) et **en ce que** les parties verticale et radiale (31', 81) peuvent être parfaitement couplées avec la rainure circulaire (27, 62), et **en ce que** lesdits rouleaux (13) ont une taille telle qu'ils peuvent être couplés entre eux d'une manière coulissante et transversalement dans l'intérieur des fentes (31, 80) relatives du couvercle de fermeture (12, 47) et être agencés en contact avec la surface plate inclinée (33, 83), de sorte qu'ils peuvent rouler en contact sur cette surface inclinée (33, 83) et la rainure circulaire (27, 62), cependant sans pouvoir se déplacer de manière transversale par rapport à cette dernière.

2. Ensemble de poulie selon la revendication 1, **caractérisé en ce que** dans ledit ensemble de poulie (45), la rotation de la demi-poulie mobile (46) est produite par le couvercle de fermeture (47), et le long de la surface cylindrique (56) de la demi-poulie (46), on prévoit un ensemble de fentes enfoncées (63) avec une base plate (64) radialement et espacées à égale distance les unes des autres le long de tout ledit périmètre et étendues à partir de la surface périphérique (54) à proximité de la base de la rainure circulaire (62), et adaptées pour loger certains moyens de guidage (48), chacun prévu avec une rainure rectiligne (73) et maintenu en position par un moyen de fixation circulaire (49), de telles rainures (73) étant positionnées parallèlement au trou central (51) du corps (50) et étant adaptées pour loger, d'une manière coulissante, ledit couvercle de fermeture (47), dont chaque partie (81) a une partie parallélépipède centrale (84) à l'extérieur de la circonférence (82), chacune insérée dans la même rainure (73) de sorte que le couvercle (47) est solidaire en rotation avec la demi-poulie mobile (46) permettant cependant à ladite demi-poulie mobile (46) de coulisser longitudinalement le long du moyeu (14).

3. Ensemble de poulie selon la revendication 2, **caractérisé en ce que** les moyens de guidage (48) sont prévus de manière solidaire avec un matériau dur tel que par exemple une matière plastique ou un matériau métallique, par le biais de l'usinage avec des machines-outils, et sont sensiblement constitués par une partie centrale allongée (65), avec des surfaces inférieures plates (66) et des surfaces supérieures (67), avec la partie externe (68) constituée par une surface (69) avec le même rayon de courbure du périmètre (53) qui a une rainure longitudinale plate (70) pour toute sa longueur avec le même rayon de courbure de la surface cylindrique (56), et avec la partie interne prévue avec deux parois latérales (71 et 72) identiques entre elles avec une hauteur presque égale à celle des fentes (63), perpendiculaires auxdites surfaces (68) et délimitant ladite rainure centrale (73) transversale et centrale par rapport à ladite rainure (70), lesdits moyens de guidage (48) étant ensuite insérés dans lesdites fentes (63), avec leurs surfaces inférieures (66) en contact avec la base plate (64), et les surfaces latérales (74 et 75) des parois (71 et 72) en contact avec les parois des mêmes fentes (63), et de sorte que la surface (69) coïncide avec le périmètre (53) et la rainure (70) avec la surface cylindrique (56).

4. Ensemble de poulie selon la revendication 2, **caractérisé en ce que** ledit moyen de fixation (49) est constitué par une bague (49) avec un rayon de courbure interne identique à celui de la surface cylindrique (56) et une hauteur légèrement inférieure à celle de la rainure (70) et est agencé extérieurement en contact sur ladite surface cylindrique (56), en venant en butée sur le gradin orthogonal (55) et inséré dans les rainures (70) des guides (48), ladite bague (49) étant bloquée ainsi à l'intérieur desdites rainures (70) de sorte qu'elle ne permet pas les mouvements axiaux et vers l'extérieur des guides (48).

5. Ensemble de poulie selon la revendication 2, **caractérisé en ce que** chacune desdites parties parallélépipèdes centrales (84) des parties (81) du couvercle de fermeture (47) est délimitée par deux rainures latérales semi-cylindriques (85) parallèles et identiques entre elles.
